# EUROPEAN PATENT APPLICATION

(11) **EP 2 645 535 A1**
(43) Date of publication of application: **02.10.2013**
(21) Application number: 12382115.9
(22) Date of filing: 30.03.2012
(51) Int. Cl.: H02K 1/27

(54) **Permanent magnet rotor**

(71) Applicant: Alstom Wind, S.L.U., 08005 Barcelona (ES)
(72) Inventor: Muñiz Casais, César, 08552 Taradell (Barcelona) (ES); Claramunt Estecha, Santiago, 08028 Barcelona (ES); Román Mallada, José Luis, 08960 Sant Just Desvern (Barcelona) (ES); Prats Mustarós, Josep, 08001 Barcelona (ES); Ardley, Glenn, 5242 Birr (CH)
(74) Representative: ZBM Patents

(57) **Abstract**

A permanent magnet rotor comprising a rotor rim and a plurality of permanent magnet modules arranged on the outer or inner circumference of the rotor rim, the permanent magnet modules extending generally along an axial direction and being of substantially constant axial-cross section, and comprising a base adapted to be fixed to the rim of the generator rotor, and one or more permanent magnets, wherein the permanent magnet module is integrally formed in axial cross-section, and wherein the permanent magnets are embedded in the modules.

## Description

The present invention relates to a permanent magnet rotor for an electrical machine, and more particularly relates to a generator rotor that is especially suitable for a wind turbine.

### BACKGROUND ART

Electrical machines, such as motors and generators having a rotor with permanent magnets are known. They are generally deemed to be reliable and require less maintenance than other generator topologies.

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor ("directly driven") or through the use of a gearbox. Particularly for offshore wind turbines, direct drive systems employing permanent magnets are usually chosen.

Such a direct drive wind turbine generator may have e.g. a diameter of 6 - 8 meters and a length of e.g. 2 - 3 meters. Hundreds of magnets may need to be attached, e.g. by screwing or gluing to the circumference of the rotor. It will be clear that this manufacturing process can be cumbersome.

Furthermore, if one or more magnets is damaged and needs to be replaced, the access to these magnets can be complicated (especially with large size generators), such that maintenance can become very expensive.

This size and type of generator however is not limited to offshore applications and not even to the technical field of wind turbines only. Generators of considerable dimensions that may suffer from the same problems and/or have the same complications may also be found e.g. in steam turbines and water turbines. Also relatively large permanent magnet motors may have the same or similar problems.

Cooling of the components is generally an important requirement in an electric machine. A cooling air flow may be established by the rotation of the rotor. In some implementations, an additional cooling air flow may be provided by a dedicated fan. Furthermore, in some implementations a liquid cooling circuit may be provided. Incorporation of a cooling circuit may further complicate the assembly and manufacture of large permanent magnet generators. A plurality of radial cooling holes may need to be drilled. These radial holes may complicate manufacture and assembly and will generally not lead to homogeneous cooling.

### SUMMARY OF THE INVENTION

In a first aspect, the present invention provides a permanent magnet rotor comprising a rotor rim and a plurality of permanent magnet modules arranged on the outer or inner circumference of the rotor rim. The permanent magnet modules extend generally along an axial direction and are of substantially constant axial-cross section, and comprise a base adapted to be fixed to the rim of the generator rotor, and one or more axial rows of permanent magnets, The permanent magnet module is integrally formed in axial cross-section, and the permanent magnets are embedded in the modules.

In this aspect of the invention, a permanent magnet rotor is provided for which the assembly and maintenance is facilitated. Both for repair and manufacture, modules of magnets can be relatively easily inserted in place and removed. Additionally, since the permanent magnet module is integrally formed (i.e. it is a monolithic piece) in axial cross-section, the manufacturing tolerances for the modules may be reduced, since there are less pieces that need to be joined.

Herein, axial cross-section may be defined as the cross-section with a plane that is perpendicular to the rotational axis of the rotor. An axial direction may be defined as a direction coinciding with the rotational axis of the rotor or parallel thereto.

In some embodiments, the permanent magnet modules may comprise one or more pole pieces integrally formed with the base.

In some embodiments, the permanent magnets may have a circumferential magnetic orientation and may be substantially rectangular in axial cross-section and each of the permanent magnets is inclined with respect to the central radial plane of the module and/or with respect to the radial plane of the magnet. The inclined magnets may lead to beneficial power and torque characteristics as their magnetic flux may be more concentrated. In other embodiments, the permanent magnets may be rectangular and substantially lie along a radial plane of the magnets. In yet further embodiments, the magnets may be arranged perpendicular to the central radial plane of the magnets, i.e. in this case they are "tangentially" arranged.

In some embodiments, each of the permanent magnet modules may comprise two axial rows of magnets. The axial rows of magnets may include, one, or two or more magnets axially positioned behind each other.

In preferred embodiments, all the modules may be substantially identical. The assembly of the generator rotor may thus be simplified. In alternative embodiments, modules with a single axial row of permanent magnet may be used. Not all modules are necessarily identical in this configuration.

In some embodiments, one or more of the permanent magnet modules may comprise a first and a second row of permanent magnets and a central cooling channel arranged between said first and second rows. Such a central cooling channel may be formed as an orifice extending axially through the permanent magnet modules. In some embodiments, one cooling channel may be incorporated at the foot of each of the (rows of) magnets, and at least one cooling channel may be incorporated at the top of each of the (rows of) magnets. In some embodiments, a cooling channel may be arranged at one or more of the four corners of one or more of the (rows of) magnets.

In some embodiments, the axial cooling channel may be delimited by one or more of the magnets. The cooling may thus more effectively cool the magnets. Additionally, the cooling channel may be formed e.g. by punching or laser cutting at the same time that the slots / holes for the magnets are formed.

In some embodiments, the rotor may comprise a plurality of anchors for fixing the permanent magnet modules to the rotor rim, wherein the permanent magnet modules comprise a base having a bottom surface adapted to be fit to the inner or outer circumference of the rotor rim, and two axially extending side surfaces, and the two side surfaces of the base of the permanent magnet modules each comprise an axially extending groove, and wherein the anchors have a shape that fits in axially extending grooves of neighbouring permanent magnet modules. Optionally, these anchors may be substantially T-shaped.

In these embodiments, a particularly easy way of installing the modules on the rotor rim is provided. The anchors may first be loosely attached to the rotor rim. After placement of the module, the anchor may be tightened and may engage with the base of the module.

In yet a further aspect, the disclosure provides a wind turbine comprising a generator having a rotor substantially as hereinbefore described. In some implementations, the wind turbine may be a direct drive wind turbine. In particular, the wind turbine may be an offshore direct drive wind turbine.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figures 1 illustrates an axial cross-section of a permanent magnet module in accordance with a first embodiment of the present invention;
Figure 2 illustrates an axial cross-section of a permanent magnet module in accordance with another embodiment of the present invention;
Figures 3a - 3b schematically illustrate a rotor in accordance with further embodiments of the present invention; and
Figures 4a and 4b schematically illustrate further embodiments.

### DETAILED DESCRIPTION OF EMBODIMENTS

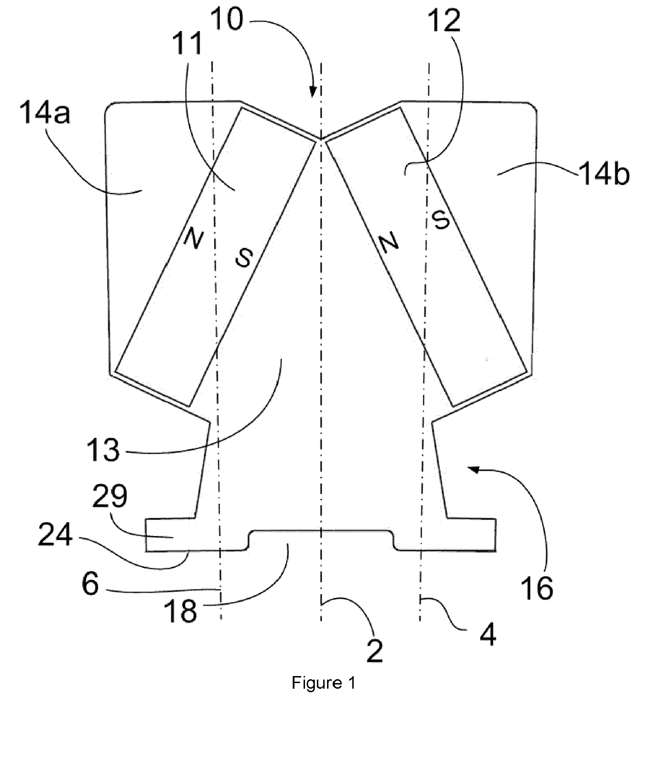

Figure 1 illustrates an axial cross-section of a permanent magnet module in accordance with a first embodiment of the present invention. Permanent magnet module 10 comprises a base 13, a first row of permanent magnets 11 and a second row of permanent magnets 12. The axial rows of magnets may be a single magnet, or a plurality of magnets axially positioned behind each other.

The North and South of the permanent magnets are indicated in figure 1. The magnets may have a circumferential magnetic orientation (also sometimes referred to as "transversal" or "tangential" orientation), i.e. the Norths and Souths of the magnets are arranged in the rotor next to each other in a circumferential (or "tangential") direction.

The magnets may be inclined towards a central radial plane 2 of the module. The magnets do not extend along the local radial planes 4 and 6 (the radial planes passing through the center of the magnets), as illustrated in figure 1. The magnetic flux lines from the North of the second magnet 12 to the South of the fist magnet 11 will be substantially straight, i.e. horizontal. The two magnets together may form a single pole, and the magnetic flux lines from the North of the first magnet to the South on the second magnet will enclose a winding arranged on the stator (not shown). Pole pieces 14a and 14b act as flux concentrators.

The permanent magnet module may be of substantially constant cross-section and may comprise a stack of metal sheets. The metal sheets of the stack may be welded stuck to each other, or may be joined e.g. by adhesives. Such a laminated structure may reduce or avoid eddy currents.

The metal sheets may be formed by punching or e.g. laser cutting and may be glued together. Rectangular through-holes may be formed in the metal sheets so as to embed the rectangular permanent magnets. These holes may also be formed e.g. by punching or by laser cutting. In alternative embodiments, instead of a stack of metal sheets, an integral piece could be used. Embedding the magnets in this way reduces the part count and as a result of the reduction of components that are to be assembled, tolerances may automatically decrease.

The magnets may be securely fixed using suitable adhesive. At both the front and the rear end, the magnets may be sealed from the outside using e.g. end plates and/or epoxy resin.

The base 13 has an upper portion with a substantially isosceles triangular cross-section with the permanent magnets arranged along the sides of the triangle. The bottom 24 of the base may be adapted, to fit on the inner or outer circumference of the rotor rim. The bottom of the base may thus be slightly curved.

A weight saving recess 18 may be provided at the bottom. The side surfaces of the base may comprise grooves. The base 13 may comprise legs 29 forming the lower end of the grooves. Suitably shaped anchors may be used for fixing the permanent magnet modules to the rotor rim. The anchors may be of such shape that they engage with the surfaces of the grooves 16 (and legs 29) when fixed to the rotor rim.

To assemble the rotor, the anchors may be loosely attached at the circumference of the rotor rim. Then, the permanent magnet modules 10 may be inserted and slid between two neighbouring anchors. Then, to fix the magnet modules in place, the bolts of the anchors may be tightened, so that the anchors press a portion of the base against the circumference of the rotor rim.

In this aspect, a permanent magnet rotor is provided for which the assembly and maintenance is facilitated. Both for repair and manufacture, modules of magnets can be relatively easily inserted and removed. Friction between the magnets and rotor rim during installation and/or maintenance may be avoided.

Since the grooves in the side surfaces of the modules are substantially larger than the corresponding side portions of the anchors, a space remains between two modules. This space may serve for cooling.

The base 13 and pole pieces may e.g. be made from steel or another magnetically conducting material. The permanent magnets may be made e.g. from AlNiCo steel (Aluminium-Nickel-Cobalt), rare earth magnetic materials such as neodymium (NdFeB), or samarium-cobalt, but may also be made from e.g. ceramic materials.

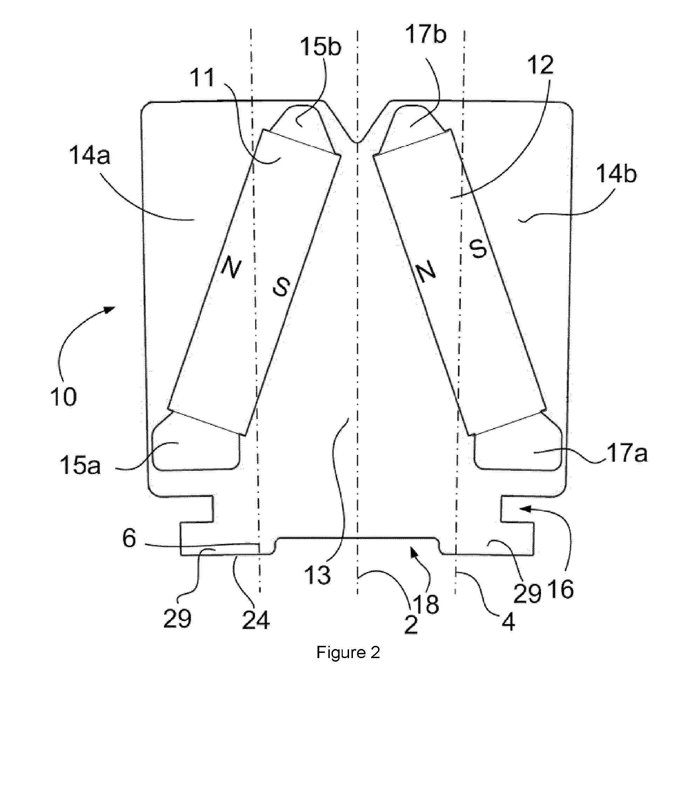

Figure 2 schematically illustrates a cross-section of a permanent magnet module according to another embodiment. In this case, each module may comprise two axial rows of embedded permanent magnets which are inclined towards a central radial plane, substantially similar to the embodiments illustrated in figure 1.

In this embodiment, an axially extending cooling channel 15a is provided at the foot (i.e. inner end) of the first magnet 11. Another cooling channel 15b is provided at the top (i.e. outer end) of the first magnet. Similar cooling channels 17a and 17b are provided at the foot and top of the second magnet respectively. The cooling channels are incorporated in the module in this configuration, which facilitates the manufacture and assembly while assuring enough cooling.

The bottom of the base comprises grooves 16, which in this case may be formed by straight cut-outs. The permanent magnets may be embedded in a similar way as described before. T-shaped anchors may sit substantially exactly in the grooves 16.

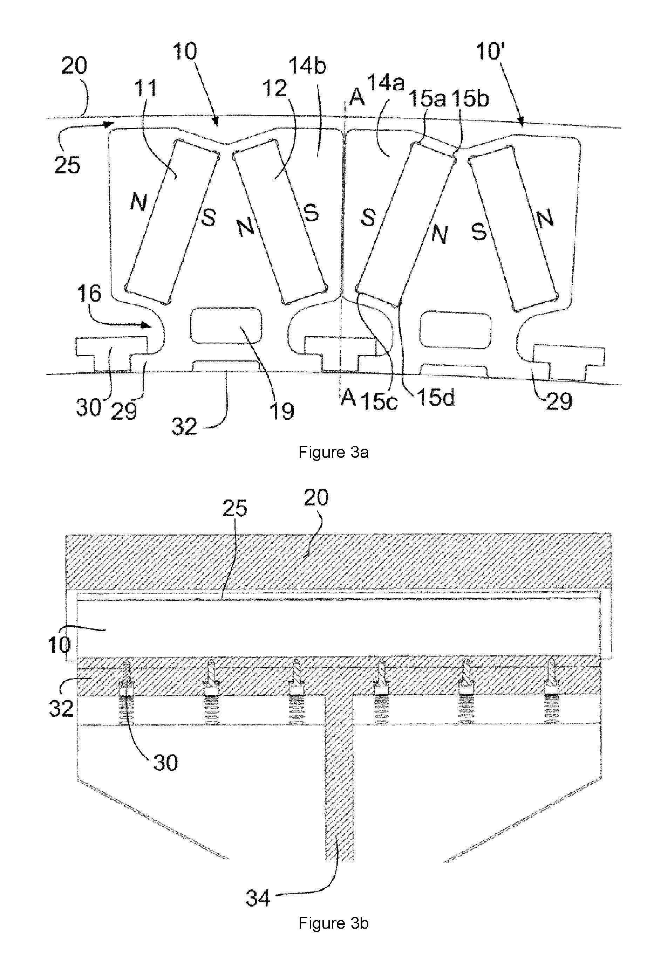

Figures 3a and 3b illustrate another embodiment in axial cross-section and in radial cross-section respectively.

Figure 3a illustrates two permanent magnet modules installed on the rotor rim next to each other. Each of the modules 10 and 10' comprises a first magnet 11 (or first row of magnets) and a second magnet 12 (or second row of magnets) which are rectangular and are inclined with respect to the local radial planes of the magnets.

The permanent magnet modules may have a circumferential magnetic orientation. It may be seen that the magnetization of the magnets of one module is the opposite of the magnetization of the magnets of the neighbouring module. Pole pieces 14a and 14b may act as flux concentrators.

In alternative embodiments, the two neighbouring modules could be formed as a single module.

Also illustrated in figure 3a are the stator 20 and the air gap 25 between rotor and stator. In this embodiment, the stator substantially surrounds the rotor. In other implementations, the rotor may surround the stator.

The permanent magnet modules may comprise a central cooling channel 19. Further, smaller cooling channels 15a, 15b, 15c and 15d may be provided in the four corners of the rectangular magnets. The magnets may be embedded in the permanent magnet modules. To form the cooling channels in the corners of the permanent magnets, the axial holes in which the permanent magnets may be inserted may incorporate rounded corners. The holes may be formed by e.g. punching or laser cutting. The space not occupied by the magnets after their insertion may serve as cooling channel(s).

T-shaped anchors 30 may be used to attach the modules to the outer circumference of the rotor rim 32. The two sideways extending anchoring portions of the T-shaped anchor fit in a corresponding groove 16 of the permanent magnet modules.

The attachment of the permanent magnet modules to the rotor rim may further be seen in figure 3b. The central rotor structure of the rotor may comprise spokes that are substantially T-shaped in radial cross-section. However, any other alternative central rotor structure supporting the rotor rim may be used.

In the embodiments illustrated in figures 1 - 3, the pairs of (rows of) embedded magnets of the modules are arranged as an inverted "V". This disposition of magnets may have advantages during assembly and installation. Neighbouring modules repel each other, which may facilitate assembly. Additionally, it may be easier to magnetize the permanent magnets.

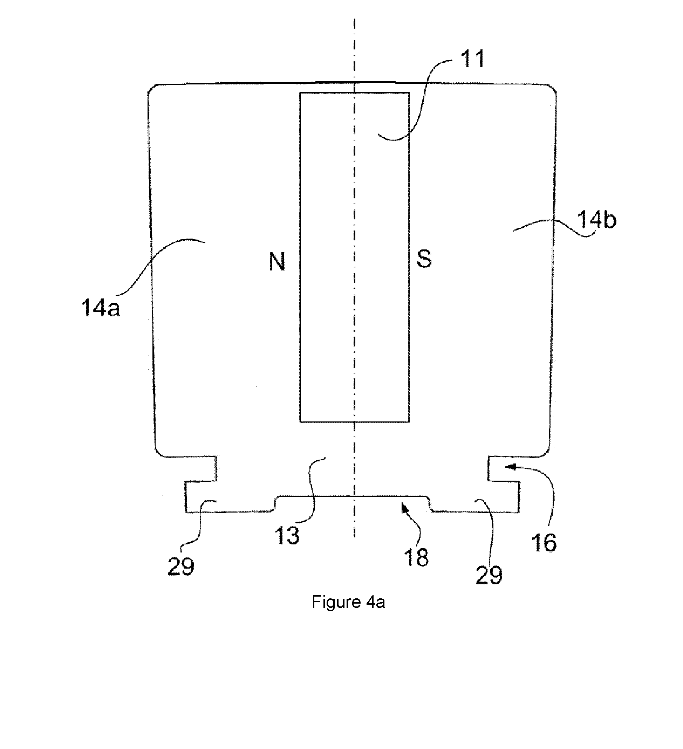

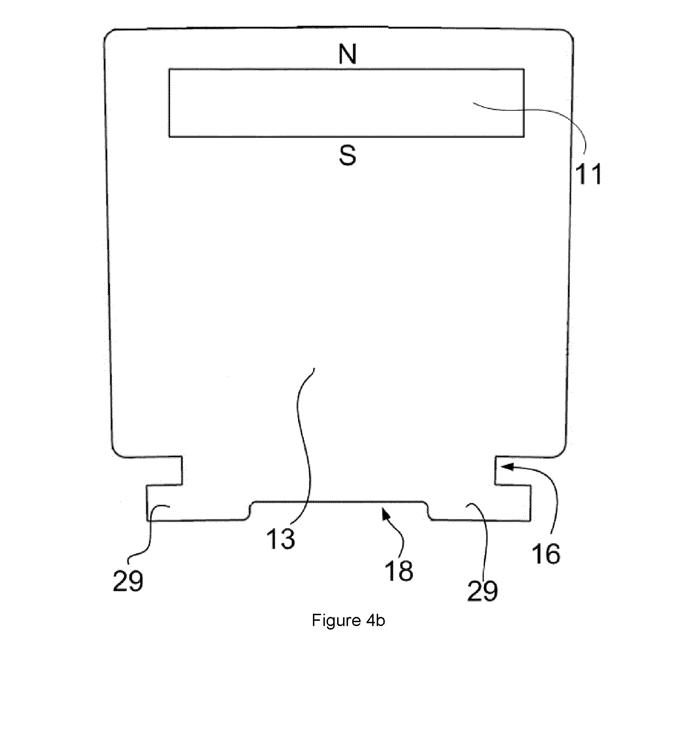

Figures 4a and 4b schematically illustrate further embodiments. Figure 4a illustrates an embodiment wherein a permanent magnet module comprises a single axial row of permanent magnets 11. In this embodiment, the axial rows of permanent magnets may have a circumferential magnetic orientation and may be substantially rectangular in axial cross-section. Each of the permanent magnets extends along the central radial plane of the module.

Figure 4b illustrates an embodiment wherein each of the permanent magnet modules comprises a single axial row of permanent magnets. The row of magnets may be formed by a single magnet or a plurality of magnets. The permanent magnets in this embodiment are tangentially arranged and may have a radial magnetic orientation.

Inclination of the magnets with respect to the corresponding local radial plane (radial plane passing through the center of the magnet) may vary. The angle of inclination with respect to the radial plane may be in the range of 0 - 90°, more particularly in the range of 10 ° - 50 °, in particularly between 10° and 40°.

The permanent magnet modules as illustrated herein may have a length that substantially corresponds to the axial length of the electrical machine, e.g. a generator or motor; each permanent magnet module thus spans substantially the entire length of the electrical machine. In other embodiments, the length of a module may be substantially half of the axial length of the electrical machine; two permanent magnet modules span the length of the electrical machine. In these cases, one module may be inserted from the front and one module may be inserted from the rear. Similarly, in some embodiments, the anchors may span the length of the electrical machine. In other embodiments, the anchors are divided in various segments that together span the length of the electrical machine.

In most of the embodiments illustrated herein, T-shaped anchors were used to securely fix the base of the modules to the rotor rim. In other embodiments, other anchors may be used that have a different shape that is substantially complementary to the grooves formed in the side surfaces of the base.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A permanent magnet rotor comprising a rotor rim and a plurality of permanent magnet modules arranged on the outer or inner circumference of the rotor rim,
the permanent magnet modules extending generally along an axial direction and being of substantially constant axial-cross section, and comprising
a base adapted to be fixed to the rim of the generator rotor, and one or more permanent magnets, wherein
the permanent magnet module is integrally formed in axial cross-section, and wherein the permanent magnets are embedded in the modules.

2. A permanent magnet rotor according to claim 1, wherein the permanent magnet module comprises one or more pole pieces integrally formed with the base.

3. A permanent magnet rotor according to claim 1 or 2, wherein each of the permanent magnets has a circumferential magnetic orientation and is substantially rectangular in axial cross-section and wherein
each of the permanent magnets is inclined with respect to the radial plane of the magnet.

4. A permanent magnet rotor according to any of claims 1 - 3, wherein each of the permanent magnet modules comprises two axial rows of magnets.

5. A permanent magnet rotor according to any of claims 1 - 4, wherein all the modules are substantially identical.

6. A permanent magnet rotor according to any of claims 1 - 5, wherein one or more of the permanent magnet modules comprise a first and a second axial row of permanent magnets and a central cooling channel arranged between said first and second rows.

7. A permanent magnet rotor according to claim 6, wherein the central cooling channel extends from an edge of the first row of magnets to an edge of the second row of magnets.

8. A permanent magnet rotor according to any of claims 1 - 7, wherein one or more of the permanent magnet modules comprise at least one cooling channel at the foot of each of the magnets, and/or at least one cooling channel at the top of each of the magnets.

9. A permanent magnet rotor according to claim 8, wherein one or more of the permanent magnet modules comprise a cooling channel at one or more of the four corners of at least one of the magnets.

10. A permanent magnet rotor according to any of claims 1 - 9, wherein the magnets are glued to the modules.

11. A permanent magnet rotor according to any of claims 1 - 10, further comprising a plurality of anchors for fixing the permanent magnet modules to the rotor rim, wherein
the permanent magnet modules comprise a base having a bottom surface adapted to be fit to the inner or outer circumference of the rotor rim, and two axially extending side surfaces, and
the two side surfaces of the base of the permanent magnet modules each comprise an axially extending groove, and wherein
the anchors have a shape that fits in axially extending grooves of neighbouring permanent magnet modules.

12. A permanent magnet rotor according to claim 11, wherein the anchors are substantially T-shaped.

13. A permanent magnet rotor according to any of claims 1 - 12, wherein the base and pole pieces are formed by a stack of metal sheets.

14. Wind turbine comprising a generator having a rotor according to any of claims 1 - 13.

15. Wind turbine according to claim 14, wherein the wind turbine is a direct drive wind turbine.
